Europäisches Patentamt

**European Patent Office**

**Office européen des brevets**

(19)

(11) Numéro de publication: **0 393 339 B1**

(12)

# FASCICULE DE BREVET EUROPEEN

(45) Date de publication de fascicule du brevet: **17.08.94** (51) Int. Cl.⁵: **A23J 3/26**, A23L 1/314, A23G 3/00

(21) Numéro de dépôt: **90104315.8**

(22) Date de dépôt: **07.03.90**

(54) Préparation de pré-caséinates et utilisations.

(30) Priorité: **21.04.89 EP 89107174**

(43) Date de publication de la demande:
**24.10.90 Bulletin 90/43**

(45) Mention de la délivrance du brevet:
**17.08.94 Bulletin 94/33**

(84) Etats contractants désignés:
**BE CH DE FR GB IT LI NL**

(56) Documents cités:
**EP-A- 0 202 484**
**FR-A- 2 242 036**
**GB-A- 1 092 659**
**US-A- 1 896 300**

(73) Titulaire: **SOCIETE DES PRODUITS NESTLE S.A.**
**Case postale 353**
**CH-1800 Vevey (CH)**

(72) Inventeur: **Abraham, Denis**
**26, rue d'Esglandes**
**F-50880 Pont-Hebert (FR)**
Inventeur: **Fournet, Gaston**
**8, rue Beaudelaire**
**F-80330 Cagny (FR)**
Inventeur: **Moehrle, Jean**
**La Meauffe**
**F-50880 Pont-Hebert (FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

Rank Xerox (UK) Business Services
(3.10/3.09/3.3.3)

## Description

La présente invention se rapporte à la préparation de caséinates destinés à l'alimentation humaine ou animale.

Les caséinates constituent la famille de produits protéiques les plus riches en protéines de grande qualité nutritionnelle avec un bon équilibre des acides aminés. Leurs qualités fonctionnelles d'émulsifiants et d'agents de liaison trouvent de nombreuses applications dans l'industrie alimentaire, notamment dans la charcuterie-salaison, les plats cuisinés, les crèmes glacées, les sauces, les blanchisseurs de café, les biscuits riches en protéines, les petits déjeuners aux céréales, les succédanés de crèmes, les produits diététiques, en particulier les succédanés de lait, les aliments de survie, les fromages pauvres en matières grasses, les succédanés de fromage pour plats cuisinés pour citer quelques exemples.

On les fabrique habituellement par réaction en présence d'eau de caséine acide et d'un agent solubilisant alcalin ou alcalino-terreux puis séchage par pulvérisation ou extrusion. Ces méthodes présentent plusieurs inconvénients:

- la caséine est difficile à mettre en suspension, à fortiori à solubiliser. L'eau ajoutée ne sert qu'à la réalisation de la réaction et il faut ensuite l'éliminer par séchage, ce qui nécessite une grande dépense d'énergie car les caséinates sont difficiles à sécher. L'investissement étant important, il est nécessaire de fabriquer sur une grande échelle, c'est-à-dire de grandes quantités d'un produit de composition déterminée, ce qui n'est pas compatible avec le désir d'une certaine flexibilité, c'est-à-dire de réaliser à la demande des caséinates de nature et de compositions variées, en quantités parfois faibles, adaptés à telle ou telle application,
- la réaction nécessite un excès d'agent solubilisant pour obtenir un pH constant, ce qui influence négativement les propriétés organoleptiques,
- le traitement thermique peut entraîner une dégradation de la valeur nutritionnelle de la caséine.

On a proposé, par exemple selon GB-A-1092659, de préparer un caséinate de sodium

a) par mélange à sec de caséine et d'une base alcaline,

b) par pulvérisation de la vapeur humide sur le mélange sec et ensuite,

c) par séchage. Selon ce brevet, la mise en présence de la caséine et de la base alcaline ne suffirait pas à produire un caséinate et c'est pour cette raison qu'il serait nécessaire d'ajouter de la vapeur humide pour que la réaction puisse avoir lieu. En conséquence le procédé connu comporte les étapes ultérieures b) et c) d'humidification et de séchage.

Ainsi, les étapes successives a-c sont toutes considérées comme nécessaires à l'obtention du résultat visé, a savoir la préparation d'un caséinate ayant les propriétés fonctionnelles et organoleptiques requises pour les utilisations habituelles. Les étapes supplémentaires b, d'humidification et c, de séchage font intrinsèquement partie du procédé connu.

US-A-1896300 montre également que s'il y a bien dans un mode de réalisation un traitement gazeux préalable de la caséine avec l'ammoniac à sec, celui-ci est nécessairement suivi d'une humidification (étape b), produisant une solution à 10-15% de solides, puisque l'ammoniac et l'eau sont éliminées ensuite dans l'étape c) ultérieure de séchage en tour de pulvérisation.

La présente invention est basée sur la constatation surprenante que l'omission des étapes b-c précédentes ne change pas les propriétés des produits qui se comportent comme des caséinates vrais dans les applications habituelles.

Nous avons trouvé de façon surprenante que le simple mélange à sec de caséine acide et d'un composé à réaction basique au moyen d'un appareillage restreint permettait , qu'il y ait ou non réaction entre ces ceux constituants , d'obtenir un composé final présentant les mêmes propriétés fonctionnelles qu'un caséinate, et ceci sans addition d'eau ou de vapeur et donc sans séchage ultérieur. En ce qui concerne les caséinates alcalins, on obtient une solution vraie, par opposition à une solution colloïdale ou un gel par mise en suspension, puis dissolution sous agitation du composé final dans un milieu aqueux de pH entre 6 et 7.

L'invention concerne donc un procédé de préparation d'un pré-caséinate, caractérisé par le fait que l'on mélange, par voie sèche, de la caséine acide et 0,5 à 10% en poids par rapport au mélange d'un composé à réaction basique à l'état gazeux ou à l'état solide dans le but d'obtenir directement, sans addition d'eau ou de vapeur d'eau, un produit sec auquel la mise en suspension aqueuse confère des propriétés fonctionnelles équivalentes à celles d'un caséinate correspondant.

Dans le contexte de l'invention, le terme "pré-caséinate" désigne un produit sec constitué aussi bien du mélange des réactifs solides, caséine acide et composé à réaction basique, n'ayant pas réagi, que le produit de leur réaction ainsi qu'un mélange des réactifs et du produit de réaction. On a constaté en effet que, bien que ne formant pas immédiatement un caséinate au sens chimique du terme, c'est-à-dire un sel de caséine, le mélange confère au produit obtenu, lorsqu'il est mis en suspension aqueuse, des propriétés, par exemple une absorption d'eau et un pouvoir émulsifiant, analogues, voire supérieures à celles des caséinates correspondants. De plus, le produit obtenu se disperse mieux qu'un caséinate correspondant, ne forme pas de grumeaux et se solubilise plus rapidement dans un milieu aqueux sous agitation. Par ailleurs, la caséine acide placée dans une atmosphère d'amine volatile ou d'ammoniac, acquiert au bout de quelques dizaines d'heures des propriétés émulsifiantes comparables, voire meilleures que celles d'un caséinate correspondant. Le produit obtenu constitue également un "pré-caséinate" dans le contexte de l'invention.

Selon un premier mode de réalisation de l'invention, qui est préféré, on mélange intimement les réactifs solides par voie sèche. La caséine acide mise en oeuvre se présente sous forme de poudre. Le terme caséine acide recouvre aussi bien la caséine acide traditionnelle obtenue directement par acidification du lait que la caséine obtenue indirectement, telle que par exemple une caséine présure ré-acidifiée, c'est-à-dire débarrassée de l'essentiel de son calcium par un lavage abondant à l'acide. La caséine peut se présenter sous différents états d'hydratation. Ordinairement, telle qu'elle est obtenue industriellement, par séchage par pulvérisation, elle contient environ 10% en poids d'humidité. On peut pousser son séchage, par exemple en étuve, jusqu'à siccité, bien que cela ne soit pas préféré.

Le "composé à réaction basique" est choisi de préférence parmi les oxydes de métaux alcalins et alcalino-terreux de cuivre, de zinc et de fer, les hydroxydes de métaux alcalins et alcalino-terreux, les sels minéraux ou organiques de métaux alcalins et alcalino-terreux et les amines.

Comme sel alcalin, on utilise par exemple un carbonate, hydrogéno-carbonate, phosphate, hydrogéno-phosphate de sodium ou de potassium hydraté ou anhydre, soluble dans un milieu aqueux; comme oxyde, on choisit par exemple un oxyde de cuivre, de zinc ou de fer, un oxyde alcalino-terreux, insoluble dans un milieu aqueux, par exemple l'oxyde de magnésium. Comme hydroxyde, on choisit par exemple l'hydroxyde de calcium. Les réactifs basiques particulièrement préférés sont les carbonates de sodium et de potassium en raison de leur facilité d'utilisation en particulier de leur absence d'hygroscopicité et de tendance à la carbonatation.

Bien entendu, on peut réaliser des pré-caséinates mixtes, par exemple calcium-sodium, fer-sodium ou calcium-potassium en mettant en présence dans les proportions souhaitées, les composés basiques ci-dessus et la caséine acide.

Pour que le mélange des réactifs soit homogène, il est souhaitable que leur densité soit rapprochée ainsi que leur granulométrie afin d'éviter une sédimentation relative d'un des réactifs à l'entreposage. La densité (après tassement, c'est-à-dire la masse spécifique obtenue après 300 secousses) des réactifs se situe de préférence entre 0,6 et 1,3. Leur granulométrie est de préférence inférieure à 850 $\mu$m et particulièrement comprise entre 50 et 500 $\mu$m.

En milieu sec ou faiblement hydraté, la réaction est très lente ou pratiquement nulle comme cela peut être déterminé en colorant préalablement les particules alcalines à la phénol-phtaléine. Après 6 mois on distingue encore la présence de particules colorées. Cependant, dans certains cas, la décoloration de la masse laisse supposer un début de réaction favorisée semble-t-il par l'eau d'hydratation de la caséine.

Dès le contact avec l'eau, sous agitation, les particules alcalines se dissolvent en colorant la phase aqueuse dont la décoloration progressive indique une réaction avec la caséine, le pH se situant au-dessous du pH de virage de la phénol-phtaléine, soit 8,5. L'aspect des suspensions: translucide et collante dans le cas du sodium et du potassium ou blanche dans le cas du calcium, indique que l'on est en présence de caséinates.

Selon un second mode de réalisation de l'invention, on réalise la réaction entre la caséine acide et un composé à réaction basique à l'état gazeux, par diffusion gazeuse, par exemple avec une amine volatile et de préférence avec l'ammoniac. La réaction peut être suivie par contrôle du pH ou par dosage de l'ammoniac. On peut travailler sans inconvénient avec un excès d'ammoniac et remélanger le pré-caséinate avec la caséine ou en variante désorber l'ammoniac, par exemple par chauffage. La réaction peut se faire par exemple par circulation gazeuse à contre-courant du déplacement de la caséine, par exemple dans un tunnel.

La quantité de composé à réaction basique utilisée est 0,5 à 10% en poids et de préférence 2 à 5% en poids par rapport au mélange des réactifs.

On a constaté qu'un entreposage des pré-caséinates entre 4 et 35°C ne modifie pas leurs caractéristiques fonctionnelles et organoleptiques. L'évolution du pouvoir émulsifiant au cours du temps a montré que celui-ci variait peu en fonction de la température et était pratiquement le même au bout de 105 j. Par ailleurs, la comparaison de la saveur d'un pré-caséinate de sodium obtenu selon l'invention et d'un caséinate de sodium du commerce a montré que la sensation buccale des deux produits est différente: douçâtre et collante pour le caséinate, saline et sableuse pour le pré-caséinate. On a constaté une évolution semblable des deux produits au cours du temps, ceux-ci se conservant parfaitement pendant trois mois à 35°C.

L'invention concerne également un procédé de préparation d'un caséinate, caractérisé par le fait que l'on extrude un pré-caséinate précédent dans des conditions ménagées vers une enceinte sous vide, en présence de 6 à 20% en poids d'eau de granulés expansés. Les granulés obtenus peuvent entrer dans la composition de produits de confiserie ou de snacks, par exemple comme fourrure de barres chocolatées, comme annexe de décoration de crèmes glacées, comme ingrédient de snacks enrichis en protéines.

L'extrusion permet également la préparation de composants sous forme de granulés destinés à être dispersés dans un aliment diététique, par exemple un produit laitier du genre des laits fermentés assurant ainsi sa supplémentation en oligo-éléments.

Dans les exemples ci-après:
- l'absorption d'eau est définie par la quantité en ml d'eau absorbée par gramme de poudre selon la méthode de Baumann. Elle correspond à la quantité d'eau, contenue dans un tube capillaire gradué de capacité 1,5 ml, absorbée en 30 min. par un échantillon de 100 mg de poudre convenablement réparti sur une membrane filtrante de porosité 8 m déposée sur une plaque de verre fritté reliée au tube capillaire .
- le pouvoir émulsifiant est défini par le poids en g d'huile émulsionnée par g de poudre lorsqu'on ajoute de l'huile de tournesol au débit de 0,6 ml/s dans 20 ml d'une solution de chlorure de sodium 0,6 M contenant 1 g de poudre, sous agitation à 500 t/min,
- par ailleurs, les pH sont déterminés par méthode électrochimique, les teneurs en sodium, potassium et calcium par spectrométrie d'émission, en ammoniac par méthode électrochimique.

Les exemples ci-après illustrent l'invention. Dans ceux-ci, les parties et pourcentages sont en poids, sauf indication contraire.

Exemple 1

On mélange intimement 3 g de carbonate de sodium déca-hydraté à 97 g de caséine acide hydratée (contenant 10% d'eau) à l'aide d'un mélangeur à sec. Le mélange obtenu contient 0,5% de sodium. Le pH d'une suspension aqueuse à 10% de ce mélange est 5,7.

On détermine l'absorption d'eau en fonction du temps du pré-caséinate obtenu comme indiqué précédemment, immédiatement après mélange et après entreposage du mélange sec pendant 1, 7, 14 et 30 jours à 20°C.

Les résultats sont indiqués dans le tableau 1 ci-après:

TABLEAU 1

| Absorption d'eau (ml/g) | Durée d'entreposage (j) | | | | |
|---|---|---|---|---|---|
| | 0 | 1 | 7 | 14 | 30 |
| après 5 min. | 2,95 | 3,2 | 3,1 | 3,3 | 3,5 |
| après 10 min. | 3,55 | 3,8 | 3,65 | 3,7 | 4 |
| après 15 min. | 3,9 | 4,15 | 3,9 | 4,1 | 4,3 |
| après 20 min. | 4,1 | 4,4 | 4,15 | 4,15 | 4,45 |
| après 30 min. | 4,25 | 4,65 | 4,45 | 4,4 | 4,6 |

A titre de comparaison, un caséinate de sodium du commerce contenant 1% de sodium, absorbe au bout de 30 min. 3,91 ml d'eau/g et une caséine acide du commerce 2,35 ml/g. De plus le pré-caséinate se disperse mieux que le caséinate du commerce: il n'y a pas de grumeaux et la solubilisation est plus rapide. La détermination du pouvoir émulsifiant comme indiqué précédemment, en fonction du temps écoulé, après la mise en contact avec l'eau, défini comme la quantité d'huile pouvant être émulsionnée par g de poudre, a donné les résultats indiqués dans le tableau 2 ci-après.

TABLEAU 2

| Pouvoir émulsifiant (g) | Durée d'entreposage du mélange sec (j) | | | | |
|---|---|---|---|---|---|
| | 0 | 1 | 7 | 14 | 30 |
| après 15 min. | 437 | 435 | 440 | 450 | 500 |
| après 1 h. | 440 | 454 | 362 | 456 | 440 |
| après 4 h. | 433 | 445 | 377 | 374 | 430 |

A titre de comparaison, 1 g de caséinate de sodium commercial émulsifie 460 g d'huile et 1 g de caséine acide commerciale 237 g après 15 min. de contact avec l'eau.

Exemple 2

On mélange intimement 3 g de carbonate de potassium anhydre à 97 g de caséine acide hydratée (à 8,6% d'eau) dans un mélangeur à sec. Le mélange obtenu contient 1,4% de potassium. Le pH d'une suspension aqueuse à 10% de ce mélange est 6,3.

On détermine l'absorption d'eau et le pouvoir émulsifiant du pré-caséinate obtenu dans les mêmes conditions qu'à l'exemple 1.

Les résultats sont indiqués dans les tableaux 3 et 4 ci-après.

TABLEAU 3

| Absorption d'eau (ml/g) | Durée d'entreposage (j) à 20 et à 35 °C | | | | | |
|---|---|---|---|---|---|---|
| | 0 | 1 | 14 | | 30 | |
| | 20 °C | 20 °C | 20 °C | 35 °C | 20 °C | 35 °C |
| après 5 min. | 2,39 | 2,2 | 2,1 | 2 | 2,03 | 2,1 |
| après 10 min. | 2,6 | 2,4 | 2,2 | 2,05 | 2,23 | 2,25 |
| après 15 min. | 2,66 | 2,55 | 2,3 | 2,15 | 2,3 | 2,35 |
| après 20 min. | 2,71 | 2,65 | 2,3 | 2,15 | 2,4 | 2,45 |
| après 30 min. | 2,82 | 2,8 | 2,44 | 2,3 | 2,5 | 2,55 |

A titre de comparaison l'absorption d'eau d'un caséinate de potassium du commerce à 1,7% de potassium est 1,35 ml/g et le pré-caséinate se disperse mieux.

TABLEAU 4

| Pouvoir émulsifiant (g) | Durée d'entreposage du mélange sec (j) à 20 ou à 35 °C | | | | | |
|---|---|---|---|---|---|---|
| | 0 | 1 | 14 | | 30 | |
| | 20 °C | 20 °C | 20 °C | 35 °C | 20 °C | 35 °C |
| après 4 h. | 513 | 510 | 452 | 452 | 410 | 445 |

A titre de comparaison, le pouvoir émulsifiant d'un caséinate de potassium du commerce à 1,7% de potassium est 500 g après 4 h. Par ailleurs, on peut affirmer qu'il y a eu réaction entre la caséine acide et le carbonate de potassium puisque des particules de carbonate de potassium colorées à la phénolphtaléine ont totalement disparu au bout de deux mois, la dispersion du pré-caséinate dans l'eau se traduisant immédiatement par la formation d'une suspension incolore.

Exemple 3

On mélange intimement 3 g d'hydroxyde de calcium à 97 g de caséine acide hydratée (à 10% d'eau) à l'aide d'un mélangeur à sec. Le mélange obtenu contient 1,2% de calcium. Le pH d'une suspension aqueuse à 10% de ce mélange est 6,2.

On détermine l'absorption d'eau et le pouvoir émulsifiant du pré-caséinate obtenu dans les mêmes conditions qu'à l'exemple 1. Les résultats obtenus sont indiqués dans les tableaux 5 et 6 ci-après.

TABLEAU 5

| Absorption d'eau (ml/g) | Durée d'entreposage (j) à 20°C | | | | |
|---|---|---|---|---|---|
| | 0 | 1 | 7 | 14 | 30 |
| après 5 min. | 1,55 | 1,25 | 1,75 | 1,7 | 1,7 |
| après 10 min. | 2,10 | 1,6 | 2,35 | 2,2 | 2,2 |
| après 15 min. | 2,45 | 1,95 | 2,75 | 2,6 | 2,5 |
| après 20 min. | 2,8 | 2,15 | 3,05 | 2,9 | 2,75 |
| après 30 min. | 3,3 | 2,6 | 3,5 | 3,35 | 3,2 |

A titre de comparaison, un caséinate de calcium du commerce contenant 1,2% de calcium absorbe 1,75 ml/g au bout de 5 min. et 3,6 ml/g au bout de 30 min. De plus le pré-caséinate se disperse mieux.

TABLEAU 6

| Pouvoir émulsifiant (g) | Durée d'entreposage (j) à 20°C | | | | |
|---|---|---|---|---|---|
| | 0 | 1 | 7 | 14 | 30 |
| Immédiatement | 410 | 480 | 420 | 395 | 380 |
| après 1 h. | 402 | 370 | 402 | 350 | 404 |
| après 4 h. | 409 | 390 | 388 | 406 | 410 |

A titre de comparaison, le pouvoir émulsifiant d'un caséinate de calcium du commerce contenant 1,2% de calcium est de 450 g immédiatement après la mise en contact avec l'eau.

Exemple 4

On mélange intimement 98,4 g de caséine acide hydratée (à 10% d'eau) avec 1,6 g d'oxyde de magnésium à l'aide d'un mélangeur à sec. Le mélange contient 1% de magnésium. On détermine l'absorption d'eau en fonction du temps du pré-caséinate obtenu dans les mêmes conditions qu'à l'exemple 1 dès la confection du mélange (sans entreposage).

Les résultats sont indiqués dans le tableau 7 ci-après:

TABLEAU 7

| Absorption d'eau (ml/g) après une durée de (min.) | | | | |
|---|---|---|---|---|
| 5 | 10 | 15 | 20 | 30 |
| 2,7 | 3 | 3,2 | 3,3 | 3,8 |

Par ailleurs, le pouvoir émulsifiant du pré-caséinate déterminé dans les conditions de l'exemple 1 est 510 g immédiatement après la mise en contact avec l'eau.

Exemple 5

On détermine l'absorption d'eau et le pouvoir émulsifiant comme précédemment de pré-caséinates de sodium, de potassium et de calcium provenant de caséines acides de différents degrés d'hydratation, obtenues par séchage à l'étuve à 103°C de caséine acide à 10% d'humidité soit:

a:     caséine acide à 10% d'humidité
b:     caséine acide à 5% d'humidité

c: caséine acide à moins de 1% d'humidité

d: pré-caséinate de sodium obtenu à partir de caséine a et de carbonate de sodium anhydre

e: pré-caséinate de sodium obtenu à partir de caséine b et de carbonate de sodium anhydre

f: pré-caséinate de sodium obtenu à partir de caséine c et de carbonate de sodium anhydre

g: pré-caséinate de potassium obtenu à partir de caséine acide à 9% d'humidité et de carbonate de potassium anhydre

h: pré-caséinate de potassium obtenu à partir de caséine acide à 4% d'humidité et de carbonate de potassium anhydre

i: pré-caséinate de potassium obtenu à partir de caséine c et de carbonate de potassium anhydre

j: pré-caséinate de calcium obtenu à partir de caséine a

k: pré-caséinate de calcium obtenu à partir de caséine b

l: pré-caséinate de calcium obtenu à partir de caséine c

Les résulats obtenus sont indiqués dans les tableaux 8 et 9 ci-après:

## TABLEAU 8

Absorption

d'eau ml/g

après:

| | a | b | c | d | e | f | g | h | i | j | j | l |
|---|---|---|---|---|---|---|---|---|---|---|---|---|
| 5 min. | 2,35 | 2,62 | 2,71 | 3,15 | 2,97 | 3,86 | 2,39 | 2,19 | 2,85 | 3.02 | 3,33 | 3,31 |
| 10 min. | 2,35 | 2,62 | 2,71 | 3,42 | 3,24 | 4,26 | 2,6 | 2,38 | 3,09 | 3,17 | 3,55 | 3,44 |
| 15 min. | 2,35 | 2,62 | 2,71 | 3,56 | 2,44 | 4,53 | 2,66 | 2,45 | 3,33 | 3,31 | 3,77 | 3,58 |
| 20 min. | 2,35 | 2,62 | 2,71 | 3,7 | 3,51 | 4,66 | 2,71 | 2,52 | 3,41 | 3,45 | 3,91 | 3,72 |
| 30 min. | 2,35 | 2,62 | 2,71 | 3,76 | 3,58 | 4,8 | 2,82 | 2,66 | 3,65 | 3,59 | 4,13 | 3,98 |

On constate que dans le cas des caséines (a, b, c) la reprise d'humidité est constante avec le temps et inversément proportionnelle au degré d'hydratation.

Pour ce qui est des pré-caséinates, l'absorption d'eau est proportionnelle au temps. L'absorption d'eau des précaséinates provenant de caséine anhydre (f, i, l) est plus élevée que celle de ceux provenant de caséine hydratée à 10% (d, g, j). On ne peut cependant pas dire qu'elle soit inversément proportionnelle au degré d'hydratation de la caséine de départ.

7

TABLEAU 9

Pouvoir

émulsifiant (g)

|  | a | b | c | d | e | f | g | h | i | j | k | l |
|---|---|---|---|---|---|---|---|---|---|---|---|---|
| immédiate-ment | 237 | 250 | 270 | 430 | 410 | 375 | 473 | 443 | 365 | 440 | 415 | 335 |
| après 1 h. | 343 | - | - | - | - | - | 475 | 445 | 361 | - | - | - |
| après 4 h. | 290 | - | - | - | - | - | 513 | 480 | 364 | - | - | - |

Légende - : non déterminé

On voit que le pouvoir émulsifiant des pré-caséinates est proportionnel à leur teneur en eau (d, g, j), ce qui n'est pas le cas des caséines (a, b, c).

Lorsque la caséine de départ est hydratée, le gonflement préalable dans l'eau a un effet favorable sur le pouvoir émulsifiant (g, h).

Exemple 6

On procède à la préparation de pré-caséinates de sodium à partir de caséine acide hydratée (à 8,6% d'eau) et de 1 à 6,5% par rapport au mélange de carbonate de sodium anhydre.

On détermine les pouvoirs émulsifiants comme indiqué précédemment, dès la préparation et après 1 mois d'entreposage.

Les résultats sont indiqués dans le tableau 10 ci-après:

TABLEAU 10

| Caséine acide / carbonate de sodium | Na % | pH d'1 sol.aqu. à 10% | Humidité % | Pouvoir émulsifiant (g) après (j) | |
|---|---|---|---|---|---|
|  |  |  |  | 0 | 30 |
| 100 / 0 | - | 3,6 | 8,6 | 298 | 250 |
| 99 / 1 | 0,45 | 5,4 | 8 | 437 | 484 |
| 98,3/1,7 | 0,76 | 5,9 | 7,95 | 477 | 534 |
| 97,6/2,4 | 1,05 | 6,2 | 7,9 | 484 | 557 |
| 96 / 4 | 1,77 | 7,3 | 7,8 | 509 | 570 |
| 94,4/5,6 | 2,45 | 7,5 | 7,7 | 552 | 572 |
| 93,5/6,5 | 2,83 | 9,1 | 7,6 | 588 | 596 |

Aucun échantillon ne présente de défaut de goût en suspension aqueuse à 10%, le pouvoir émulsifiant est proportionnel à l'alcalinité du mélange.

Exemple 7

On dispose dans un dessicateur maintenu à 21-22°C une série de capsules de 5 cm de diamètre et 3 cm de hauteur contenant chacune 10 g de caséine acide hydratée (à 10% d'eau). Le fond du dessicateur contient 100 ml d'une solution aqueuse d'ammoniaque à 30%. On retire périodiquement une capsule sur le contenu de laquelle on détermine la teneur en ammoniac ($NH_3$%) par voie électrochimique, le pH et le pouvoir émulsifiant (comme indiqué précédemment) en fonction du temps.

Les résultats sont regroupés dans le tableau 11 ci-après:

TABLEAU 11

| Temps (h) | 20 | 40 | 60 | 150 | 190 | 210 | 230 | 250 | 300 |
|---|---|---|---|---|---|---|---|---|---|
| pH d'1 sol. aqu. à 10% | 9,45 | 9,4 | 9,35 | 9,3 | 9,1 | 8,95 | 8,9 | 8,9 | 9 |
| $NH_3$% | 2,75 | 3,1 | 2,58 | 2,47 | 2,31 | 2,12 | 1,65 | 1,61 | 1,8 |
| Pouvoir émulsifiant (g) | 435 | 450 | 480 | 573 | 542 | 443 | 415 | 400 | 420 |

Il y a formation de caséinate d'ammonium par mise en milieu aqueux comme l'indiquent les valeurs du pH et du pouvoir émulsifiant. Les pouvoir émulsifiants sont aussi bons, sinon meilleurs que lors d'utilisation de bases fortes.

Exemple 8

On prépare 20 kg d'un produit de charcuterie constitué d'une émulsion de protéines de viande, de caséinate du commerce ou de pré-caséinate obtenu selon l'invention, d'eau et de matière grasse par travail mécanique intense à l'aide d'un cutter des matières premières suivantes dans les proportions ci-après:

| | % |
|---|---|
| glace pilée à -1°C | 21,5 |
| Assaisonement dont sel | 1,8 |
| épices | 0,4 |
| Caséinate ou pré-caséinate de sodium | 1 ou 2 |
| Viande maigre de porc à 15% de lipides à 2°C | Q S |
| Graisse de porc à 90% de lipides à -5°C | Q S |

Les quantités de viande maigre de porc et de graisse de porc sont ajustées de manière à avoir dans l'émulsion finale respectivement 25, 35 ou 42% de lipides.

Pour ce faire, on mélange la viande maigre et l'assaisonnement pendant 1 min. à vitesse de rotation des couteaux 1000t/min., puis on ajoute soit un caséinate de sodium du commerce contenant 6% d'humidité, soit un pré-caséinate de sodium.

On ajoute ensuite la matière grasse que l'on mélange pendant 30 s à 1000 t/min., puis pendant 15 s à 2000 t/min. et enfin pendant 15 s à 3000 t/min. On augmente alors la vitesse à 6000 t/min. et on ajoute progressivement la glace pilée en 90 s, puis on poursuit l'émulsification pendant 90 s. On arrête le cutter en on place l'émulsion (qui est à 9°C) dans un boyau cellulosique imperméable à l'humidité de 4 cm de diamètre. On fait cuire le saucisson 40 min. à 80°C en cellule à saturation d'humidité jusqu'à température à coeur de 70°C. On refroidit les saucissons à 2°C, puis on les coupe longitudinalement et transversalement pour dégustation.

Les résultats sensoriels sont indiqués dans le tableau 12 ci-après.

EP 0 393 339 B1

TABLEAU 12

| Teneur en lipides (%) | Paramètres sensoriels | Teneur en caséinate (%) | | Teneur en pré-caséinate (%) | |
|---|---|---|---|---|---|
| | | 1 | 2 | 1 | 2 |
| 25 | aspect | + | + | + | + |
| | texture | + | + | + | + |
| 35 | aspect | + | + | + | + |
| | texture | + | + | + | + |
| 42 | aspect | - | + | - | + |
| | texture | - | + | - | + |
| Légende:  + : correct  + : acceptable, présence d'une couche de 1mm de graisse à la périphérie  - : médiocre, présence de poches de 5 mm de graisse dans la masse et à la périphérie | | | | | |

Dans les conditions du test ci-dessus, les pré-caséinates présentent les mêmes propriétés et les mêmes limites d'utilisation (jusqu'à 35% de lipides) que les caséinates du commerce aux deux concentrations étudiées.

Exemple 9

On prépare 2 kg de pré-caséinate de calcium à partir de 1,98 kg de caséine acide hydratée à 10% (dont le pH d'une solution aqueuse à 10% est 4,65) et de 0,02 kg d'hydroxyde de calcium. Le pré-caséinate de calcium a les caractéristiques suivantes:

| | |
|---|---|
| pH d'une solution à 10%: | 5,56 |
| Humidité (%) | 7,5 |
| Teneur en calcium (%) | 0,68 |

A un débit de 2,34 kg/h, on introduit le pré-caséinate auquel on ajoute 6,5% d'eau dans un extrudeur à vis de diamètre 42 mm de rapport longueur/diamètre 6, pourvu d'un noyau creux avec refroidissement par circulation d'eau. La vis tourne à 40 t/min. L'extrudeur comporte une chemise extérieure rainurée (rainures de profondeur 2 mm) à double enveloppe thermorégulée à 90°C. L'extrusion a lieu par une buse à 12 filères circulaires de 1,5 mm de diamètre, la buse étant thermorégulée par circulation d'eau à 120°C au contact de la bride de maintien, vers une enceinte sous un vide de 958 mb (720 mm de mercure) tenant lieu de chambre d'expansion. La pression dans le corps de l'extrudeur est 98-245 b (100-250 kg/cm$^2$). On découpe le boudin à la sortie de la buse par deux couteaux tournant à 1000 t/min.

On obtient ainsi des granulés expansés à base de caséine qui peuvent servir par exemple d'ingrédients de fourrage de barres de confiserie ou de snacks à haute valeur nutritionnelle ou encore d'annexe de décoration en confiserie ou dans les crèmes glacées.

Exemple 10

On mélange à sec 7,15 g d'oxyde ferrique $Fe_2O_3$ à 492,85 g de caséine acide hydratée à 10% d'eau (soit un mélange à 1% de fer).

Le pH d'une suspension aqueuse à 10% de ce mélange est de 4,80. Par centrifugation de cette suspension, on obtient une masse homogène brune qu'un passage à l'étuve permet de sécher.

Bien que l'absorption d'eau du produit soit identique à celle de la caséine pure (2 ml/g après 30 min) et que les pouvoirs émulsifiants soient équivalents (247 g pour la caséine, 263 g pour le mélange) l'aspect homogène du produit en suspension aqueuse et la décantation quasi instantanée (alors que l'oxyde ferrique à 1% dans l'eau donne une suspension colloïdale) montre que l'on est en présence d'un caséinate de fer.

10

Exemple 11

On agite dans une cuve 530 g d'eau et 3 kg d'un mélange comprenant 2957 g de caséinate acide hydratée à 10% d'eau et 43 g d'oxyde ferrique $Fe_2O_3$ (soit 1% en fer).

Cette suspension est soumise à l'extrusion dans un appareil mono-vis, où la vis tournant à 100 t/min maximum et le corps sont refroidis à l'eau glycolée à 0°C, tandis que la plaque de sortie est chauffée à 110°C. Cette plaque comporte 16 filières de diamètre égal à 1,5 mm.

La pression d'extrusion est inférieure à 196 b (200 kg/cm2). Le vide est de l'ordre de 958 mb (720 mm de mercure). La coupe est assurée par 4 lames tournant à 500 t/min. Le produit est récupéré, séché 10 min à 60°C, pour un taux d'humidité final inférieur à 4%. On obtient de la sorte un caséinate de fer se présentant sous forme de billes soufflées, ce que l'on ne peut obtenir à partir de caséine acide seule.

Exemple 12

Dans les mêmes conditions qu'à l'exemple 11, mais en partant de 3 kg du mélange suivant:

| | |
|---|---|
| - Caséine acide hydratée à 10% : | 2927 g |
| - Carbonate de sodium: | 30 g |
| - Oxyde ferrique: | 43 g |

On obtient un caséinate mixte de fer et de sodium.

Exemple 13

Dans le mélange de l'exemple 12, on remplace le carbonate de sodium par 30 g d'hydroxyde de calcium. Le résultat obtenu est semblable.

Exemple 14

Aux 530 g d'eau de l'exemple 11, on ajoute un mélange de 2950 g de caséine acide hydratée à 10% et de 50 g d'oxyde de magnésium.

Dans les mêmes conditions opératoires, on obtient après extrusion de petites billes parfaitement formées de caséinate de magnésium.

Exemple 15

On procède comme à l'exemple 11 à partir du mélange sec ci-après:

| | |
|---|---|
| Hydroxyde de calcium | 33,3 g |
| Oxyde de magnésium | 16 g |
| Oxyde de zinc | 0,9 g |
| Oxyde ferrique | 1,2 g |
| Caséine acide (10% d'eau) | 2948 g |

On obtient un caséinate mixte de fer, calcium, magnésium et zinc.

Exemple 16

A partir du mélange sec ci-après:

| Hydroxyde de calcium | 16,6 g |
|---|---|
| Oxyde de magnésium | 29,1 g |
| Oxyde de zinc | 1,1 g |
| Oxyde ferrique | 1,5 g |
| Caséine acide (10% d'eau) | 2950 g |

On obtient un caséinate mixte de fer, calcium, magnésium et zinc en procédant comme à l'exemple 11.

Exemple 17

A partir du mélange sec ci-après:

| Oxyde de magnésium | 80,1 g |
|---|---|
| Oxyde de zinc | 4,5 g |
| Oxyde ferrique | 6 g |
| Caséine acide (10% d'eau) | 2910 g |

On obtient un caséinate mixte de fer, de zinc et de magnésium en procédant comme à l'exemple 11.

**Revendications**

1.  Procédé de préparation d'un pré-caséinate, caractérisé par le fait que l'on mélange, par voie sèche, de la caséine acide et 0,5 à 10%, en poids; par rapport au mélange, d'un composé à réaction basique à l'état gazeux ou à l'état solide dans le but d'obtenir directement, sans addition d'eau ou de vapeur d'eau, un produit sec auquel la mise en suspension aqueuse confère des propriétés fonctionnelles équivalentes à celles d'un caséinate correspondant.

2.  Procédé selon la revendication 1, caractérisé par le fait que l'on effectue le mélange par diffusion gazeuse d'ammoniac ou d'une amine volatile.

3.  Procédé selon la revendication 1, caractérisé par le fait que le composé à réaction basique choisi est parmi les oxydes de métaux alcalins et alcalino-terreux de cuivre, de zinc et de fer, les hydroxydes de métaux alcalins et alcalino-terreux, les sels minéraux ou organiques de métaux alcalins et alcalino-terreux et les amines.

4.  Procédé selon la revendication 3, caractérisé par le fait que le composé à réaction basique est le carbonate de sodium ou de potassium hydratés ou anhydres.

5.  Procédé selon la revendication 3, caractérisé par le fait que le composé à réaction basique est l'hydroxyde de calcium.

6.  Utilisation d'un pré-caséinate préparé selon l'une des revendications 1 à 5 comme ingrédient d'un produit destiné à l'alimentation humaine ou animale.

7.  Procédé de préparation d'un caséinate, caractérisé par le fait que l'on extrude un pré-caséinate obtenu selon l'une des revendications 1 à 5 dans des conditions ménagées vers une enceinte sous vide en présence de 6 à 20% en poids d'eau de manière à former des granulés expansés.

8.  Utilisation d'un caséinate préparé selon la revendication 7 comme ingrédient d'un produit destiné à l'alimentation humaine ou animale.

## Claims

1. A process for the production of a pre-caseinate, characterized in that acidic casein and 0.5 to 10% by weight, based on the mixture, of a compound of basic reaction in gaseous form or in solid form are dry-mixed to obtain a dry product which, on suspension in water, acquires functional properties equivalent to those of a corresponding caseinate.

2. A process as claimed in claim 1, characterized in that mixing is carried out by gas diffusion of ammonia or a volatile amine.

3. A process as claimed in claim 1, characterized in that the compound of basic reaction is selected from the alkali and alkaline earth metal oxides of copper, zinc and iron, alkali and alkaline earth metal hydroxides, mineral or organic salts of alkali and alkaline earth metals and amines.

4. A process as claimed in claim 3, characterized in that the compound of basic reaction is hydrated or anhydrous sodium or potassium carbonate.

5. A process as claimed in claim 3, characterized in that the compound of basic reaction is calcium hydroxide.

6. The use of a pre-caseinate prepared by the process claimed in any of claims 1 to 5 as an ingredient of a product intended for use in human or animal foods.

7. A process for the production of a caseinate, characterized in that a pre-caseinate obtained by the process claimed in any of claims 1 to 5 is extruded under controlled conditions into a vacuum chamber in the presence of 6 to 20% by weight water to form expanded granules.

8. The use of a caseinate produced by the process claimed in claim 7 as an ingredient of a product intended for use in human or animal foods.

## Patentansprüche

1. Verfahren zur Herstellung eines Präcaseinats, dadurch gekennzeichnet, daß man auf trockenem Wege ein saures Casein und 0,5 bis 10 Gew.-%, bezogen auf die Mischung, einer basisch reagierenden gasförmigen oder festen Verbindung mischt, um direkt, ohne Wasser oder Wasserdampf zuzugeben, ein trockenes Produkt zu erhalten, das bei seiner Überführung in eine wäßrige Suspension funktionelle Eigenschaften aufweist, die denen eines entsprechenden Caseinats äquivalent sind.

2. Verfahren nach Anspruch 1, dadurch gekennzeichnet, daß die Mischung durch Gasdiffusion mit Ammoniak oder einem leichtflüchtigen Amin bewirkt wird.

3. Verfahren nach Anspruch 1, dadurch gekennzeichnet, daß die basisch reagierende Verbindung ausgewählt ist aus Oxiden der Alkalimetalle oder Erdalkalimetalle, von Kupfer, von Zink oder von Eisen, aus den Hydroxiden der Alkalimetalle oder Erdalkalimetalle , aus anorganischen oder organischen Alkalimetallsalzen oder Erdalkalimetallsalzen und aus Aminen.

4. Verfahren nach Anspruch 3, dadurch gekennzeichnet, daß die basisch reagierende Verbindung hydratisiertes oder wasserfreies Natriumcarbonat oder Kaliumcarbonat ist.

5. Verfahren nach Anspruch 3, dadurch gekennzeichnet, daß die basisch reagierende Verbindung Calciumhydroxid ist.

6. Verwendung eines Präcaseinates, hergestellt nach einem der Ansprüche 1 bis 5, als Bestandteil eines für die Ernährung von Mensch oder Tier bestimmten Produkts.

7. Verfahren zur Herstellung eines Caseinates, dadurch gekennzeichnet, daß man ein Präcaseinat, das nach einem der Ansprüche 1 bis 5 erhalten wurde, so unter schonenden Bedingungen in Gegenwart von 6 bis 20 Gew.-% Wasser in eine Vakuumumgebung extrudiert, daß expandierte Granulate gebildet werden.

8. Verwendung eines Caseinates, hergestellt nach Anspruch 7, als Bestandteil eines für die Ernährung von Mensch oder Tier bestimmten Produkts.